Europäisches Patentamt

European Patent Office

Office européen des brevets

(11) Veröffentlichungsnummer: **0 118 581**
**B1**

(12) **EUROPÄISCHE PATENTSCHRIFT**

(45) Veröffentlichungstag der Patentschrift: **15.06.88**

(51) Int. Cl.⁴: **G 01 D 15/08, B 41 J 3/20**

(21) Anmeldenummer: **83102548.1**

(22) Anmeldetag: **15.03.83**

(54) Verfahren für die Speisung von Druckelektroden in einem Elektroerosionsdrucker und Schaltungsanordnung zur Durchführung eines derartigen Verfahrens.

(43) Veröffentlichungstag der Anmeldung:
**19.09.84 Patentblatt 84/38**

(45) Bekanntmachung des Hinweises auf die Patenterteilung:
**15.06.88 Patentblatt 88/24**

(84) Benannte Vertragsstaaten:
**DE FR GB**

(56) Entgegenhaltungen:
**EP-A-0 090 058**
**DE-A-1 548 595**

(73) Patentinhaber: **IBM DEUTSCHLAND GMBH**
**Pascalstrasse 100**
**D-7000 Stuttgart 80 (DE)**
(84) **DE**

(73) Patentinhaber: **International Business Machines Corporation**
**Old Orchard Road**
**Armonk, N.Y. 10504 (US)**
(84) **FR GB**

(72) Erfinder: **Goldrian, Gottfried, Dipl.-Ing.**
**Gutacher Weg 18**
**D-7030 Böblingen (DE)**
Erfinder: **Rudolph, Volker, Dr.**
**Finkenweg 20**
**D-7031 Aidlingen 3 (DE)**

(74) Vertreter: **Blutke, Klaus, Dipl.-Ing.**
**Schönaicher Strasse 220**
**D-7030 Böblingen (DE)**

Courier Press, Leamington Spa, England.

**Beschreibung**

Verfahren für die Speisung von Druckelektroden in einem Elektroerosionsdrucker und Schaltungsanordnung zur Durchführung eines derartigen Verfahrens.

Die Erfindung betrifft ein Verfahren und eine Schaltungsanordnung für die Speisung von Druckelektroden ein einem Elektroerosionsdrucker mit Treiberstufen für Zündimpulse relativ hoher Stromstärke und relativ kurzer Dauer sowie mit Treiberstufen für Ausbrennimpulse relativ niedriger Stromstärke und im Vergleich mit den Zündimpulsen von merklich längerer Dauer. Vom Prinzip her ist dies ein Verfahren mit zwei unterschiedlich starken Stromimpulsen.

Ein Verfahren dieser Art ist in der Europäischen Patentanmeldung EP—A—0090056 bereits vorgeschlagen worden.

Ferner ist aus der DE—A—22 15 519 ein Verfahren zur Aufzeichnung von Bildinformationen auf elektrosensitivem Papier, insbesondere Registriermetallpapier, unter Verwendung einer Gruppe von einzeln ansteuerbaren Schreibelektroden bekannt, bei welchem die Einschaltdauer jeder einzelnen Schreibelektrode kürzer gewählt ist, als die Zeit, nach der der Ausbrenngang von selbst beendet ist. Außerdem ist dort bereits die Möglichkeit einer Grauwertaufzeichnung durch Veränderung des Schwärzungsgrades in der Weise offenbart, daß die Einschaltdauer der einzelnen Schreibelektroden innerhalb des Ausbrennvorganges kürzer oder länger gewählt wird. Aus der DE—A—30 40 153 ist dann ein Verfahren zum Aufzeichnen von Grautönen unterschiedlicher Helligkeit auf einen Aufzeichnungsträger mit elektrosensitivem Belag unter Verwendung von Schreibelektroden bekannt, bei dem die Unterschiede in der Grautönung durch Modulation der Flächen der einzelnen Rasterpunkte und diese durch Modulation der elektrischen Impulse hervorgerufen werden, indem die zeitliche Dauer der elektrischen Impulse moduliert wird, wie dies bereits in der obengenannten Patentschrift offenbart war.

Diese Verfahren verwenden im Prinzip nur einen starken Stromimpuls, der auf jeden Fall eine Zündung des zum Ausbrennen einer Markierung erforderlichen Lichtbogens bewirkt. Dieser Impuls muß jedoch vor dem Ende des Ausbrennvorganges abgeschaltet werden. Solche Verfahren sind jedoch für eine extrem hohe Auflösung wenig geeignet.

In der DE—A—15 48 595 ist eine Registriereinrichtung mit einer Vorrichtung zum Beschriften von metallisch beschichtetem Papier beschrieben, welche zwei miteinander verbundene Stromkreise aufweist. Würde der durch den ersten Stromkreis bewirkte Lichtbogen für das Ausbrennen der Metallschicht unterbrochen werden, würde der zweite Stromkreis eine solche Unterbrechung vermeiden.

Bei hochauflösenden Elektroerosionsdruckern wird im allgemeinen nur ein geringer Prozentsatz von Zündimpulsen hoher Leistung erforderlich sein, wenn der Drucker gut einjustiert ist und ein gutes Metallpapier verwendet wird. Zündimpulse, die nicht erforderlich sind, verschlechtern jedoch die Druckqualität. Der Grund dafür ist darin zu sehen, daß eine zu hohe Leistung die Erosion eines Punktes nach Art einer Explosion in Gang setzt. Obleich die Zündung zu etwa 20% des endgültig geschriebenen Punktes beiträgt, ist die Präzision eines Punktes jedoch erheblich höher, wenn der Ausbrennvorgang mit einem niedrigeren Strom in Gang gesetzt werden könnte. Die der Erfindung zugrundeliegende Aufgabe läßt sich also dahingehend definieren, daß Zündimpulse hoher Leistung immer dann vermieden werden sollten, wenn sie für die Zündung an sich nicht erforderlich wären. Dies wird erfindungsgemäß durch das Verfahren des Anspruchs 1 und die Schaltungsanordnung des Anspruchs 4 erreicht Vorzugsweise geht man dabei so vor, daß die Vorzögerung des die Treiberstufe für den Zündimpuls betätigenden Auslöseimpulses weniger als das 0,2 fache, vorzugsweise etwa das 0,1 fache der Dauer des Zündimpulses beträgt.

Die Erfindung wird nun anhand eines Ausführungsbeispiels in Verbindung mit der beigefügten Zeichnung im einzelnen näher erläutert.

In den Zeichnungen zeigt:

Fign. 1A und 1B ein Prinzipschaltbild der neuen Schaltungsanordnung und das Verhältnis der Impulse zueinander und

Fig. 2 die Abhängigkeit der Druckqualität von der Verzögerung in Bruchteilen der Zündimpulsbreite.

Bei bisher bekannten Verfahren und Schaltungsanordnungen wurde zunächst der Zündimpuls angelegt, der dann über die Zündimpuls-Treiberstufen den Lichtbogen zwischen Elektrode und Metallpapier zündete. Die Zündung erfolgt dabei mit einer relativ niedrigen Spannung aber einem relativ hohen Stromstoß kurzer Dauer. Der dann einsetzende Ausbrennvorgang erfordert eine höhere Spannung, läuft jedoch mit relativ geringem Strom ab und hört nach einer kurzen Zeit, beispielsweise etwa 3 µs, von selbst auf.

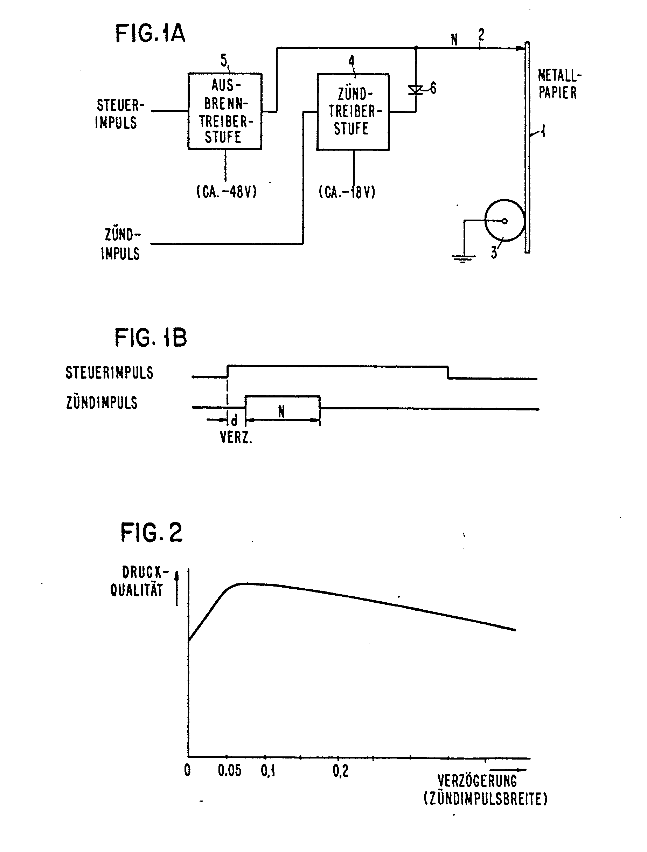

Die Schaltungsanordnung für das erfindungsgemäße Verfahren sei nun ganz kurz dargestellt. In einem Elektroerosionsdrucker wird ein mit einer Metallschicht überzogener Aufzeichnungsträger, vorzugsweise ein Metallpapier 1, verwendet, auf dem eine oder mehrere Elektroden 2 aufliegen. Das Metallpapier ist über eine Rolle 3 geerdet. Ferner ist eine Zündimpuls-Treiberstufe 4 vorgesehen, die mit einem Zündsteuerimpuls angesteuert wird. Außerdem ist eine Ausbrenn-Treiberstufe 5 vorgesehen, die ebenfalls mit einem Steuerimpuls angesteuert wird. Zwischen dem Ausgang der Ausbrenn-Treiberstufe und der Zündimpuls-Treiberstufe ist eine einseitig leitende Vorrichtung, beispielsweise eine Diode 6 eingeschaltet. Gemäß dem neuen Verfahren wird zunächst der Steuerimpuls für die Ausbrenn-Treiberstufe angelegt, wie dies aus Fig. 1B ersichtlich ist. Wenn der Ausbrennimpuls in der Lage ist, den Lichtbogen zu zunden, dann wird die Spannung zwischen der Elektrode und dem metallischen Überzug des Metallpapiers negativer als die Zündspannung, wenn nach einer Verzögerungszeit d der Zündimpuls an die Zündimpuls-Treiberstufe angelegt wird. In diesem Fall kann kein Zündstrom fließen, da die Entkopplungsdiode 6 den Ausgang der Zündimpuls-Treiberstufe sperrt. Wenn jedoch die Ausbrenn-Treiberstufe innerhalb der Verzögerung d eine Zündung nicht bewirkt hat, dann wird der Zündimpuls voll wirksam die Zündimpuls-Treiberstufe durchsteuern, die ihrerseits dann in der üblichen Weise die Zündung des Lichtbogens zwischen Elektrode und Metallpapier bewirkt. Das heißt aber, daß die Verzögerung des Zündimpulses gerade lange genug sein soll, damit die Ausbrenn-Treiberstufe eingeschaltet werden kann und einen Zündvorgang einleiten kann.

Um beste Ergebnisse mit dem verzögerten Zündimpuls zu erreichen, ist die richtige Auswahl der Verzögerung zwischen Ansteuerimpuls und Zündsteuerimpuls besonders wichtig. Die Verzögerung muß dabei lang genug sein, damit die Ausbrenn-Treiberstufe den Ausbrennvorgang für einen Punkt einleiten kann. Ist die erforderliche Verzögerung jedoch wesentlich größer als ein Zehntel der Zündimpulsbreite, dann wird die Auswahl der erforderlichen Verzögerungszeit komplizierter. Da ein verzögerter Start eine kürzere Ausbrennzeit zur Folge hat, wird sich die Qualität der einzelnen Punkte und damit die Druckqualität zunächst erhöhen und fällt dann anschließend ab, wenn die Verzögerung etwa 1/4 der Zündimpulsbreite erreicht. Dies ist in Fig. 2 übersichtlich dargestellt. Die Form dieser hier dargestellten Kurve hängt von vielen Verfahrensparametern, wie z.B. der Papierqualität, Anpreßdruck der Elektroden usw. ab. Man kann daher das Maximum der Kurve durch Veränderung einzelner Parameter nach rechts oder links verschieben. Ausgedehnte Versuche haben jedoch gezeigt, daß sich beste Ergebnisse derzeit mit einer Verzögerung d des 0,1 fachen der Dauer des Zündimpulses erzielen läßt.

**Patentansprüche**

1. Verfahren für die Speisung einer Lichtbogen-Druckelektrode in einem Elektroerosionsdrucker mit einer Treiberstufe für Zündimpulse und einer Treiberstufe für Ausbrennimpulse neidrigerer Amplitude und längerer Dauer als die des Zündimpulses, und mit einer Diode (6) zur Verhinderung der Beaufschlagung der Elektrode mit einem Zündimpuls nach erfolgter Ausbildung des Lichtbogens, in welchem Verfahren die Treiberstufen so gesteuert werden, daß die Elektrode (2) nach Ablauf einer Verzögerungszeit d — gerechnet vom Beginn ihrer Beaufschlagung mit dem Ausbrennimpuls — immer dann mit dem Zündimpuls beaufschlagt wird, wenn der Ausbrennimpuls vor Ablauf der Verzögerungszeit d nicht zur Zündung des Lichtbogens führt, und daß durch den an der Elektrode auftretenden Spannungswert bei Zündung des Lichtbogens vor Ablauf der Verzögerungszeit durch den Ausbrennimpuls über die Diode (6) der Ausgang der Zündimpulstreiberstufe (4), welcher mit der Elektrode (2) verbunden ist, gesperrt wird, wobei die Verzögerungszeit d nicht größer als die Zündimpulsdauer N ist.

2. Verfahren nach Anspruch 1, dadurch gekennzeichnet, daß die Verzögerung des die Treiberstufe für den Zündimpuls betätigenden Auslöseimpulses weniger als das 0,2fache der Dauer des Zündimpulses beträgt.

3. Verfahren nach Anspruch 2, dadurch gekennzeichnet, daß die Verzögerung etwa das 0,1fache der Dauer des Zündimpulses beträgt.

4. Schaltungsanordnung zur Durchführung des Verfahrens nach Anspruch 1, bestehend aus einer Lichtbogen-Druckelektrode (2), einer Ausbrenntreiberstufe (5) und einer Zündtreiberstufe (4), wobei diese Stufen parallel zueinander geschaltet sind und an die Elektrode (2) angeschlossen sind, einer Diode (6), die zwischen der Elektrode (2) und der zündtreiberstufe (4) geschaltet ist, und einer Steuereinrichtung, wobei die Schaltungsanordnung so ausgestatet ist daß durch die Steuereinrichtung der Beginn des Zündimpulses auf einen um die Zeit d später leigenden Zeitpunkt als der Beginn des Ausbrennimpulses festgelegt wird und daß die Diode (6) den Zündimpuls sperrt, wenn der Ausbrennimpuls innerhalb der Zeit d, welche nicht größer als die Zündimpulsdauer N ist, eine Zündung des Lichtbogens bewirkt.

**Revendications**

1. Procédé d'alimentation d'une électrode d'impression à arc électrique dans une imprimante à électroérosion, comprenant un étage excitateur pour les impulsions d'amorçage et un étage excitateur pour les impulsions de combustion de plus faible amplitude et de plus longue durée que celles de l'impulsion d'amorçage, ainsi qu'une diode (6) pour empêcher l'électrode de recevoir une impulsion d'amorçage après la formation de l'arc électrique, procédé dans lequel les étages excitateurs sont commandés de manière que l'électrode (2), après l'écoulement d'un temps de temporisation (d) — calculé à partir du début de la réception d'une impulsion de combustion-reçoive toujours l'impulsion d'amorçage, lorsque l'impulsion de combustion n'a pas provoqué l'amorçage de l'arc avant l'écoulement du temps de temporisation (d), et que la sortie de l'étage excitateur (4) des impulsions d'amorçage, qui est raccordée à l'électrode (2), soit bloquée par l'intermédiaire de la diode (6) par la tension produite au niveau de l'électrode lors de l'amorçage de l'arc électrique avant l'écoulement du temps de temporisation par l'impulsion de combustion, le temps de temporisation (d) n'étant pas supérieur à la durée de l'impulsion d'amorçage (N).

2. Procédé selon la revendication 1, caractérisé par le fait que le temporisation de l'impulsion de déclenchement actionnant l'étage supérateur pour l'impulsion d'amorçage est inférieure à 0,2 fois la durée de l'impulsion d'amorçage.

3. Procédé selon la revendication 2, caractérisé par le fait que la temporisation représente environ 0,1 fois la durée de l'impulsion d'amorçage.

4. Montage pour la mise en oeuvre du procédé selon la revendication 1, comprenant une électrode d'impression (2) à arc électrique, un étage excitateur de combustion (5) et un étage excitateur d'amorçage (4), ces étages étant montés en parallèle l'un par rapport à l'autre et étant raccordés à l'électrode (2), une diode (6) qui est montée entre l'électrode (2) et l'étage supérateur d'amorçage (4), et un dispositif de commande, le montage étant réalisé de façon que le dispositif de commande établisse le début de l'impulsion d'amorçage à un instant présentant un retard (d) par rapport au début de l'impulsion de combustion et que la diode bloque l'impulsion d'amorçage lorsque l'impulsion de combustion provoque un amorçage de l'arc électrique pendant le temps (d) qui n'est pas supérieur à la durée (N) de l'impulsion d'amorçage.

**Claims**

1. Method of operating an arc print electrode in an electroerosion printer, comprising a driver stage for ignition pulses and a driver stage for burning pulses of a lower amplitude and longer duration than the ignition pulses, and a diode (6) preventing an ignition pulse being applied to the electrode after an arc has been struck, wherein the driver stages are controlled such that the electrode (2) is subjected to an ignition pulse after a delay period d — calculated from the time the burning pulse is initially applied to the electrode — whenever the burning pulse fails to strike an arc before the delay period d has passed, and that the output of the ignition pulse driver stage (4), connected to the electrode (2), is inhibited through the diode (6) by the voltage value occurring at the electrode when the arc is struck by the burning pulse before the delay period has passed, with the delay period d not exceeding the duration N of the ignition pulse.

2. Method according to claim 1, characterized in that the delay of the pulse triggering the driver stage for the ignition pulse is less than 0.2 times the duration of the ignition pulse.

3. Method according to claim 2, characterized in that the delay is about 0.1 times the duration of the ignition pulse.

4. Circuit arrangement for implementing the method according to claim 1, comprising an arc print electrode (2); a burning driver stage (5) and an ignition driver stage (4), said stages being connected in parallel and to the electrode (2); a diode (6) connected between the electrode (2) and the ignition driver stage (4); and control means, the circuit arrangement being designed such that the control means ensures that the start of the ignition pulse is delayed by the time d over the start of the burning pulse, and that the diode (6) inhibits the ignition pulse if the burning pulse strikes an arc in the time d which does not exceed the duration N of the ignition pulse.

## FIG.1A

STEUER-IMPULS

5
AUS-BRENN-TREIBER-STUFE
(CA.-48V)

4
ZÜND-TREIBER-STUFE
(CA.-18V)

6

N    2

METALL-PAPIER

1

3

ZÜND-IMPULS

## FIG. 1B

STEUERIMPULS

ZÜNDIMPULS

d    N

VERZ.

## FIG. 2

DRUCK-QUALITÄT

0    0,05    0,1    0,2    VERZÖGERUNG
(ZÜNDIMPULSBREITE)